# EUROPEAN PATENT SPECIFICATION

(11) **EP 3 816 837 B1**
(45) Date of publication and mention of the grant of the patent: **20.12.2023**
(21) Application number: 19896819.0
(22) Date of filing: 29.10.2019
(51) Int. Cl.: G06F 21/62, H04L 9/32, H04L 9/00

(54) **DATA SHARING METHOD, APPARATUS, AND SYSTEM, AND ELECTRONIC DEVICE**
VERFAHREN, VORRICHTUNG UND SYSTEM ZUR GEMEINSAMEN DATENNUTZUNG UND ELEKTRONISCHE VORRICHTUNG
PROCÉDÉ, APPAREIL ET SYSTÈME DE PARTAGE DE DONNÉES, ET DISPOSITIF ÉLECTRONIQUE

(30) Priority: 14.12.2018 CN 201811529631
(43) Date of publication of application: 05.05.2021
(73) Proprietor: Advanced New Technologies Co., Ltd., George Town, Grand Cayman KY1-9008 (KY)
(72) Inventor: WU, Jun, Hangzhou, Zhejiang 311121 (CN)
(74) Representative: Goddar, Heinz J.
(86) International application number: PCT/CN2019/113863
(87) International publication number: WO 2020/119294

(56) References cited:
- CN-A- 107 819 770
- CN-A- 108 650 252
- CN-A- 108 650 252
- CN-A- 108 737 374
- CN-A- 110 059 495
- US-A1- 2018 026 979
- ZHANG AIQING ET AL: "Towards Secure and Privacy-Preserving Data Sharing in e-Health Systems via Consortium Blockchain", JOURNAL OF MEDICAL SYSTEMS, PLENUM PUBLISHING CO, NY, USA, vol. 42, no. 8, 28 June 2018 (2018-06-28), pages 1-18, XP036536304, ISSN: 0148-5598, DOI: 10.1007/S10916-018-0995-5 [retrieved on 2018-06-28]

## Description

### TECHNICAL FIELD

One or more embodiments of the present specification relate to the field of blockchain technologies, and in particular, to data sharing methods, apparatuses, and systems, and electronic devices.

### BACKGROUND

In related technologies, data sharing can be implemented among different members. For example, a common data sharing mode is a hosting mode, that is, a data center hosts data of each member, and subsequent processing of the data is dependent on the data center. Another common data sharing mode is an aggregation mode, that is, data is separately controlled by different members, and a data center only links the data together. Because the data center has the capability and the opportunity to store the shared data, as data sharing continues, the aggregation mode gradually develops into the hosting mode.
CN 108 650 252 A relates to a safe and fair data sharing system and method capable of protecting privacy.

### SUMMARY

The invention is defined in the independent claims. Advantageous modifications are set forth in the dependent claims.

One or more embodiments of the present specification provide data sharing methods, apparatuses, and systems, and electronic devices.

To achieve the previous objective, one or more embodiments of the present specification provide the following technical solutions:

According to a first aspect of one or more embodiments of the present specification, a data sharing system is provided, including: members, where each member respectively maintains sharable private data, and generates corresponding ciphertext index information for the private data, the ciphertext index information includes a ciphertext index of the corresponding private data and information about a member that provides the private data; and a sharing platform, where the sharing platform is connected to each member and records ciphertext index information generated by each member in an index blockchain for sharing among all members; the sharing platform forwards a data acquisition request initiated by a data requester member to a data provider member; the data acquisition request includes a ciphertext index of target data, and the sharing platform further forwards the target data returned by the data provider member to the data requester member, where the target data is encrypted by an identity public key of the data requester member.

According to a second aspect of one or more embodiments of the present specification, a data sharing method is provided and is applied to a data requester member, where the method includes: determining an index information set corresponding to target data and recorded in an index blockchain, where the index information set includes a ciphertext index of the target data and member information of a data provider of the target data, and the index information set is shared by the data provider to the index blockchain; initiating a data acquisition request to the data provider by using a sharing platform, where the data acquisition request includes the ciphertext index of the target data; and receiving response data returned by the sharing platform, where the response data is encrypted by an identity public key of the data requester.

According to a third aspect of one or more embodiments of the present specification, a data sharing method is provided and is applied to a data provider member, where the method includes: sharing an index information set corresponding to target data into an index blockchain, where the index information set includes a ciphertext index of the target data and member information of the data provider; receiving a data acquisition request initiated by a data requester by using a sharing platform, where the data acquisition request includes the ciphertext index of the target data; and returning response data to the data requester by using the sharing platform, where the response data is encrypted by an identity public key of the data requester.

According to a fourth aspect of one or more embodiments of the present specification, a data sharing method is provided and applied to a sharing platform, where the method includes: publishing an index information set corresponding to target data to an index blockchain, where the index information set includes a ciphertext index of the target data and member information of a data provider of the target data, and the index information set is submitted by the data provider to the sharing platform; forwarding a data acquisition request initiated by a data requester to the data provider, where the data acquisition request includes the ciphertext index of the target data; and returning response data provided by the data provider to the data requester, where the response data is encrypted by an identity public key of the data requester.

According to a fifth aspect of one or more embodiments of the present specification, a data sharing apparatus is provided and is applied to a data requester member, where the apparatus includes: a determining unit, configured to determine an index information set corresponding to target data and recorded in an index blockchain, where the index information set includes a ciphertext index of the target data and member information of a data provider of the target data, and the index information set is shared by the data provider to the index blockchain; a requesting unit, configured to initiate a data acquisition request to the data provider by using a sharing platform, where the data acquisition request includes the ciphertext index of the target data; and a receiving unit, configured to receive response data returned by the sharing platform, where the response data is encrypted by an identity public key of the data requester.

According to a sixth aspect of one or more embodiments of the present specification, a data sharing apparatus is provided and is applied to a data provider member, where the apparatus includes: a sharing unit, configured to share an index information set corresponding to target data into an index blockchain, where the index information set includes a ciphertext index of the target data and member information of the data provider; a receiving unit, configured to receive a data acquisition request initiated by a data requester by using a sharing platform, where the data acquisition request includes the ciphertext index of the target data; and a returning unit, configured to return response data to the data requester by using the sharing platform, where the response data is encrypted by an identity public key of the data requester.

According to a seventh aspect of one or more embodiments of the present specification, a data sharing apparatus is provided and is applied to a sharing platform, where the apparatus includes: a first publishing unit, configured to publish an index information set corresponding to target data to an index blockchain, where the index information set includes a ciphertext index of the target data and member information of a data provider of the target data, and the index information set is submitted by the data provider to the sharing platform; a forwarding unit, configured to forward a data acquisition request initiated by a data requester to the data provider, where the data acquisition request includes the ciphertext index of the target data; and a returning unit, configured to return response data provided by the data provider to the data requester, where the response data is encrypted by an identity public key of the data requester.

According to an eighth aspect of one or more embodiments of the present specification, an electronic device is provided, including: a processor; and a memory, configured to store instructions executable by the processor; where the processor implements the method according to the first aspect by running the executable instructions.

According to a ninth aspect of one or more embodiments of the present specification, an electronic device is provided, including: a processor; and a memory, configured to store instructions executable by the processor; where the processor implements the method according to the second aspect by running the executable instructions.

According to a tenth aspect of one or more embodiments of the present specification, an electronic device is provided, including: a processor; and a memory, configured to store instructions executable by the processor; where the processor implements the method according to the third aspect by running the executable instructions.

### BRIEF DESCRIPTION OF DRAWINGS

FIG. 1 is a flowchart illustrating a data sharing method, according to some example embodiments.
FIG. 2 is a flowchart illustrating another data sharing method, according to some example embodiments.
FIG. 3 is a flowchart illustrating still another data sharing method, according to some example embodiments.
FIG. 4 is a schematic structural diagram illustrating a data sharing system, according to some example embodiments.
FIG. 5 is a schematic interaction diagram illustrating a data sharing process, according to some example embodiments.
FIG. 6 is a schematic interaction diagram illustrating identity authentication, according to some example embodiments.
FIG. 7 is a schematic structural diagram illustrating a record application packet, according to some example embodiments.
FIG. 8 is a schematic structural diagram illustrating a data acquisition packet, according to some example embodiments.
FIG. 9 is a schematic structural diagram illustrating a response packet, according to some example embodiments.
FIG. 10 is a schematic structural diagram illustrating a complaint request packet, according to some example embodiments.
FIG. 11 is a schematic structural diagram illustrating a device, according to some example embodiments.
FIG. 12 is a block diagram illustrating a data sharing apparatus, according to some example embodiments.
FIG. 13 is a schematic structural diagram illustrating another device, according to some example embodiments.
FIG. 14 is a block diagram illustrating another data sharing apparatus, according to some example embodiments.
FIG. 15 is a schematic structural diagram illustrating still another device, according to some example embodiments.
FIG. 16 is a block diagram illustrating still another data sharing apparatus, according to some example embodiments.

### DESCRIPTION OF EMBODIMENTS

Example embodiments are described in detail here, and examples of the example embodiments are presented in the accompanying drawings. When the following description relates to the accompanying drawings, unless specified otherwise, same numbers in different accompanying drawings represent same or similar elements. Implementations described in the following example embodiments do not represent all implementations consistent with one or more embodiments in the present specification. On the contrary, the embodiments are only examples of device and methods that are described in the appended claims in detail and consistent with some aspects of the present specification.

It is worthwhile to note that, in other embodiments, steps of a corresponding method are not necessarily performed based on a sequence shown and described in the present specification. In some other embodiments, the method can include more or less steps than those described in the present specification. In addition, a single step described in the present specification may be broken down into multiple steps in other embodiments for description. However, the multiple steps described in the present specification may also be combined into a single step for description in other embodiments.

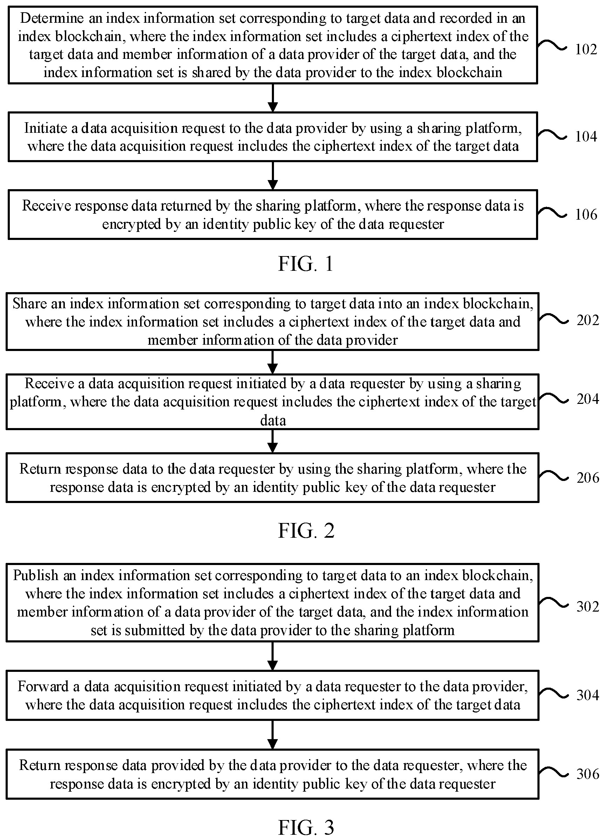

FIG. 1 is a flowchart illustrating a data sharing method, according to some example embodiments. As shown in FIG. 1, the method is applied to a data requester member, and can include the following steps:
Step 102: Determine an index information set corresponding to target data and recorded in an index blockchain, where the index information set includes a ciphertext index of the target data and member information of a data provider of the target data, and the index information set is shared by the data provider to the index blockchain.

In some embodiments, data sharing can be implemented among multiple members based on a technical solution of the present specification. In a sharing process, different roles exist: If member A initiates a data acquisition request to user B, and user B returns private data maintained by itself to member A. That is, member A plays a role of the data requester and user B plays a role of the data provider. Each member may play the role of the data requester or data provider, which is not limited in the present specification.

In some embodiments, for private data maintained by each member, an index information set corresponding to the private data can be published to an index blockchain, and recorded in a content-unified index blockchain ledger separately maintained by all blockchain nodes of the index blockchain, so each member can retrieve, based on the index blockchain ledger, an index information set corresponding to the private data maintained by each member.

In some embodiments, a sharing platform can be configured as a node of the index blockchain, and each member can generate an index information set for private data maintained by the member and send the index information set to the sharing platform, so the sharing platform sends the index information set to the index blockchain. Each member can query the index blockchain ledger by using the sharing platform or another blockchain node, or each member can download ledger data of the index blockchain ledger from the sharing platform or another blockchain node, so as to query the index information set sent by the member to the sharing platform, so as to determine whether the sharing platform has published the index information set to the index blockchain.

In some embodiments, each member is configured as a blockchain node of the index blockchain, so each member can generate an index information set for private data maintained by the member, and publish the index information set to the index blockchain by submitting a blockchain transaction containing the index information set to the index blockchain, without relying on the sharing platform.

In some embodiments, the sharing platform can be configured as a node of the index blockchain, that is, the sharing platform maintains an index blockchain ledger corresponding to the index blockchain. Accordingly, the data requester member can generate a corresponding ciphertext index (for example, a hash value of specific information) based on the specific information of the known target data (for example, when the target data is a transaction record, the specific information can include a transaction user ID corresponding to the transaction record), and initiate a query request to the sharing platform. The query request includes the ciphertext index to instruct the sharing platform to query, from the index blockchain, an index information set that includes the ciphertext index. That is, the sharing platform queries the index blockchain ledger based on the ciphertext index, and queries the index information set corresponding to the ciphertext index. Or the data requester member can request to download ledger data (that is, data of the index blockchain ledger) of the index blockchain maintained by the sharing platform, and the data requester itself queries the ledger data based on a ciphertext index, so as to query an index information set that includes the ciphertext index.

In some embodiments, the data requester is configured as a node of the index blockchain. Correspondingly, the data requester member can generate a corresponding ciphertext index based on the specific information of the known target data, and query, based on the ledger data of the index blockchain maintained by the data requester, an index information set that includes the ciphertext index, without relying on the sharing platform.

In some embodiments, because the private data is maintained by each member, and the sharing platform can only access index information (included in the previous index information set) corresponding to the private data, the sharing platform can be prevented from obtaining the private data and breaching the private data. In addition, by using the index blockchain to record the index information set, a chaining data structure of the blockchain can be used to ensure that an index information set that has already been recorded as ledger data on the blockchain cannot be randomly modified, and can be queried and verified by the sharing platform and each member, which has extremely high reliability. In addition, in the index information set recorded in the index blockchain, index information related to the private data is a ciphertext index and presented in the form of ciphertext, so content of the private data actually held by the data provider is not disclosed to the sharing platform, and the type of data requested by the data requester is also not disclosed, which ensures extremely high privacy.

Step 104: Initiate a data acquisition request to the data provider by using a sharing platform, where the data acquisition request includes the ciphertext index of the target data.

In some embodiments, the index information set is determined so the data requester can retrieve information about the data provider included in the index information set, that is, the data provider corresponding to the target data is determined, so a data acquisition request for the data provider is initiated to the sharing platform.

In some embodiments, the data acquisition request further includes an identity public key of the data requester and a signature of the data requester generated by using an identity private key of the data requester, so after obtaining the data acquisition request forwarded by the sharing platform, the data provider can extract the identity public key from the data acquisition request to authenticate the signature of the data requester, and if the authentication succeeds, the data provider determines that the data acquisition request is actually from the data requester. Certainly, in some cases, the data acquisition request does not have to include the identity public key of the data requester, for example, can include a unique identifier corresponding to the data requester, and thus the data provider can select the pre-obtained identity public key of the data requester, to verify the signature of the data requester.

Step 106: Receive response data returned by the sharing platform, where the response data is encrypted by an identity public key of the data requester.

In some embodiments, the data provider determines a plaintext index based on the ciphertext index included in the data acquisition request and a mapping relationship between a ciphertext index maintained by the data provider and a plaintext index, and queries corresponding private data based on the plaintext index, so as to return the private data as the response data to the sharing platform, so the sharing platform forwards the response data to the data requester. Certainly, the data provider can also maintain a mapping relationship between a ciphertext index and private data, so as to directly query corresponding private data based on the ciphertext index.

In some embodiments, the response data is encrypted by using the identity public key of the data requester, so only the data requester can decrypt the response data by using the identity private key of the data requester. Therefore, even if the sharing platform forwards the response data, the sharing platform can only obtain the response data in the encrypted state, thereby reducing the possibility of exfiltration or breach of the private data at the sharing platform.

In some embodiments, the response data further includes a signature of the data provider generated by using an identity private key of the data provider, so the data requester can perform authentication based on an identity public key of the data provider, and if the authentication succeeds, the data requester determines that the response data is actually from the data provider.

In some embodiments, the index information set includes a hash value of the target data; and the data requester can perform hash computation on decrypted data corresponding to the response data, and compare a computed hash value with the hash value in the index information set. When the computed hash value is consistent with the hash value in the index information set, it can be determined that the decrypted data is the target data, which indicates that the data provider does have related data and does not inadvertently or intentionally provide incorrect data. In addition, no data damage or data replacement occurs in the data transmission process, which can also indicate that content of the index information set provided by the data provider to the index blockchain is consistent with content of private data actually owned, and there is no deceit behavior.

In some embodiments, the data requester can initiate a complaint request for the target data to the sharing platform, where the complaint request includes a complaint reason and related data; when the complaint reason is verified to be legitimate based on the related data by the sharing platform or a smart contract invoked by the sharing platform from the index blockchain, the index information set is added with an invalid identifier in the index blockchain, and the index information set with the invalid identifier cannot be used for data sharing. The types of the related data included in the complaint request may vary with complaint reasons, and need to be determined based on actual situations. For example, when the complaint reason is that data is repeated, the related data can include information about data held by the data requester and information about the data involved in a complaint, so when it is determined that the two are consistent with each other and an index information set of the data held by the data requester has a relatively small block height on the index blockchain (that is, submitted to the index blockchain earlier), it can be determined that the complaint reason is legitimate. For another example, when the complaint reason is that the data is inconsistent, the related data can include the target data obtained by the data requester, a corresponding index information set, a history record of the target data obtained by the data requester from the data provider, etc., so the sharing platform can determine, based on the history record, that the target data is from the data provider, and the sharing platform can compute a hash value of the target data and compare the computed hash value with a hash value included in the index information set. Therefore, when the comparison result is that they are inconsistent, it is determined that the complaint reason is legitimate.

In some embodiments, the data requester can submit a transaction of a complaint type to the index blockchain to invoke a smart contract for processing the complaint, where the transaction includes a complaint reason and related data. The smart contract is used to verify the complaint reason based on the related data, and when the complaint reason is verified to be legitimate, the index information set is added with an invalid identifier in the index blockchain. The smart contract is recorded in the index blockchain, so a processing logic of the smart contract is transparent and cannot be tampered with. In addition, the smart contract is automatically executed, and interference from external factors is avoided, so as to ensure that a verification result of the smart contract on the complaint reason is fair and reliable.

In some embodiments, the data requester can publish a data sharing event between the data requester and the data provider to a transaction blockchain, where the data requester is configured as a node of the transaction blockchain. In some other embodiments, the data requester can send the data sharing event to the sharing platform, so the sharing platform publishes the data sharing event to the transaction blockchain, where the sharing platform is configured as a node of the transaction blockchain. The transaction blockchain is different from the previous index blockchain, and the transaction blockchain is used to record a data sharing event among members, so as to perform subsequent query and verification. By using the index blockchain and the transaction blockchain independent of each other, data of the index information set and data of the data sharing event can be separated from each other. In particular, the index blockchain needs to frequently perform an index query operation, which helps improve query efficiency of the index information set. Certainly, only a single blockchain can be used, and both the index information set and the data sharing event are recorded in the blockchain, which is not limited in the present specification.

FIG. 2 is a flowchart illustrating another data sharing method, according to some example embodiments. As shown in FIG. 2, the method is applied to a data provider member, and can include the following steps:
Step 202: Share an index information set corresponding to target data into an index blockchain, where the index information set includes a ciphertext index of the target data and member information of the data provider.

In some embodiments, data sharing can be implemented among multiple members based on a technical solution of the present specification. In a sharing process, different roles exist: If member A initiates a data acquisition request to user B, and user B returns private data maintained by itself to member A. That is, member A plays a role of the data requester and user B plays a role of the data provider. Each member may play the role of the data requester or data provider, which is not limited in the present specification.

In some embodiments, for private data maintained by each member, an index information set corresponding to the private data can be published to an index blockchain, and recorded in a content-unified index blockchain ledger separately maintained by all blockchain nodes of the index blockchain, so each member can retrieve, based on the index blockchain ledger, an index information set corresponding to the private data maintained by each member.

In some embodiments, a sharing platform can be configured as a node of the index blockchain, and each member can generate an index information set for private data maintained by the member and send the index information set to the sharing platform, so the sharing platform sends the index information set to the index blockchain. Each member can query the index blockchain ledger by using the sharing platform or another blockchain node, or each member can download ledger data of the index blockchain ledger from the sharing platform or another blockchain node, so as to query the index information set sent by the member to the sharing platform, so as to determine whether the sharing platform has published the index information set to the index blockchain.

In some embodiments, each member is configured as a blockchain node of the index blockchain, so each member can generate an index information set for private data maintained by the member, and publish the index information set to the index blockchain by submitting a blockchain transaction containing the index information set to the index blockchain, without relying on the sharing platform.

In some embodiments, the sharing platform can be configured as a node of the index blockchain, that is, the sharing platform maintains an index blockchain ledger corresponding to the index blockchain. Accordingly, the data requester member can generate a corresponding ciphertext index (for example, a hash value of specific information) based on the specific information of the known target data (for example, when the target data is a transaction record, the specific information can include a transaction user ID corresponding to the transaction record), and initiate a query request to the sharing platform. The query request includes the ciphertext index to instruct the sharing platform to query, from the index blockchain, an index information set that includes the ciphertext index. That is, the sharing platform queries the index blockchain ledger based on the ciphertext index, and queries the index information set corresponding to the ciphertext index. Or the data requester member can request to download ledger data (that is, data of the index blockchain ledger) of the index blockchain maintained by the sharing platform, and the data requester itself queries the ledger data based on a ciphertext index, so as to query an index information set that includes the ciphertext index.

In some embodiments, the data requester is configured as a node of the index blockchain. Correspondingly, the data requester member can generate a corresponding ciphertext index based on the specific information of the known target data, and query, based on the ledger data of the index blockchain maintained by the data requester, an index information set that includes the ciphertext index, without relying on the sharing platform.

In some embodiments, because the private data is maintained by each member, and the sharing platform can only access index information (included in the previous index information set) corresponding to the private data, the sharing platform can be prevented from obtaining the private data and breaching the private data. In addition, by using the index blockchain to record the index information set, a chaining data structure of the blockchain can be used to ensure that an index information set that has already been recorded as ledger data on the blockchain cannot be randomly modified, and can be queried and verified by the sharing platform and each member, which has extremely high reliability. In addition, in the index information set recorded in the index blockchain, index information related to the private data is a ciphertext index and presented in the form of ciphertext, so content of the private data actually held by the data provider is not disclosed to the sharing platform, and the type of data requested by the data requester is also not disclosed, which ensures extremely high privacy.

Step 204: Receive a data acquisition request initiated by a data requester by using a sharing platform, where the data acquisition request includes the ciphertext index of the target data.

In some embodiments, the index information set is determined so the data requester can retrieve information about the data provider included in the index information set, that is, the data provider corresponding to the target data is determined, so a data acquisition request for the data provider is initiated to the sharing platform.

In some embodiments, the data acquisition request further includes an identity public key of the data requester and a signature of the data requester generated by using an identity private key of the data requester, so after obtaining the data acquisition request forwarded by the sharing platform, the data provider can extract the identity public key from the data acquisition request to authenticate the signature of the data requester, and if the authentication succeeds, the data provider determines that the data acquisition request is actually from the data requester. Certainly, in some cases, the data acquisition request does not have to include the identity public key of the data requester, for example, can include a unique identifier corresponding to the data requester, and thus the data provider can select the pre-obtained identity public key of the data requester, to verify the signature of the data requester.

Step 206: Return response data to the data requester by using the sharing platform, where the response data is encrypted by an identity public key of the data requester.

In some embodiments, the data provider determines a plaintext index based on the ciphertext index included in the data acquisition request and a mapping relationship between a ciphertext index maintained by the data provider and a plaintext index, and queries corresponding private data based on the plaintext index, so as to return the private data as the response data to the sharing platform, so the sharing platform forwards the response data to the data requester. Certainly, the data provider can also maintain a mapping relationship between a ciphertext index and private data, so as to directly query corresponding private data based on the ciphertext index.

In some embodiments, the response data is encrypted by using the identity public key of the data requester, so only the data requester can decrypt the response data by using the identity private key of the data requester. Therefore, even if the sharing platform forwards the response data, the sharing platform can only obtain the response data in the encrypted state, thereby reducing the possibility of exfiltration or breach of the private data at the sharing platform.

In some embodiments, the response data further includes a signature of the data provider generated by using an identity private key of the data provider, so the data requester can perform authentication based on an identity public key of the data provider, and if the authentication succeeds, the data requester determines that the response data is actually from the data provider.

In some embodiments, the index information set includes a hash value of the target data; and the data requester can perform hash computation on decrypted data corresponding to the response data, and compare a computed hash value with the hash value in the index information set. When the computed hash value is consistent with the hash value in the index information set, it can be determined that the decrypted data is the target data, which indicates that the data provider does have related data and does not inadvertently or intentionally provide incorrect data. In addition, no data damage or data replacement occurs in the data transmission process, which can also indicate that content of the index information set provided by the data provider to the index blockchain is consistent with content of private data actually owned, and there is no deceit behavior.

In some embodiments, the data provider can publish a data sharing event between the data provider and the data requester to a transaction blockchain, where the data provider is configured as a node of the transaction blockchain. In some other embodiments, the data provider can send the data sharing event to the sharing platform, so the sharing platform publishes the data sharing event to the transaction blockchain, where the sharing platform is configured as a node of the transaction blockchain. The transaction blockchain is different from the previous index blockchain, and the transaction blockchain is used to record a data sharing event among members, so as to perform subsequent query and verification. By using the index blockchain and the transaction blockchain independent of each other, data of the index information set and data of the data sharing event can be separated from each other. In particular, the index blockchain needs to frequently perform an index query operation, which helps improve query efficiency of the index information set. Certainly, only a single blockchain can be used, and both the index information set and the data sharing event are recorded in the blockchain, which is not limited in the present specification.

FIG. 3 is a flowchart illustrating still another data sharing method, according to some example embodiments. As shown in FIG. 3, the method is applied to a sharing platform and can include the following steps:
Step 302: Publish an index information set corresponding to target data to an index blockchain, where the index information set includes a ciphertext index of the target data and member information of a data provider of the target data, and the index information set is submitted by the data provider to the sharing platform.

In some embodiments, data sharing can be implemented among multiple members based on a technical solution of the present specification. In a sharing process, different roles exist: If member A initiates a data acquisition request to user B, and user B returns private data maintained by itself to member A. That is, member A plays a role of the data requester and user B plays a role of the data provider. Each member may play the role of the data requester or data provider, which is not limited in the present specification.

In some embodiments, for private data maintained by each member, an index information set corresponding to the private data can be published to an index blockchain, and recorded in a content-unified index blockchain ledger separately maintained by all blockchain nodes of the index blockchain, so each member can retrieve, based on the index blockchain ledger, an index information set corresponding to the private data maintained by each member.

In some embodiments, a sharing platform can be configured as a node of the index blockchain, and each member can generate an index information set for private data maintained by the member and send the index information set to the sharing platform, so the sharing platform sends the index information set to the index blockchain. Each member can query the index blockchain ledger by using the sharing platform or another blockchain node, or each member can download ledger data of the index blockchain ledger from the sharing platform or another blockchain node, so as to query the index information set sent by the member to the sharing platform, so as to determine whether the sharing platform has published the index information set to the index blockchain.

In some embodiments, each member is configured as a blockchain node of the index blockchain, so each member can generate an index information set for private data maintained by the member, and publish the index information set to the index blockchain by submitting a blockchain transaction containing the index information set to the index blockchain, without relying on the sharing platform.

In some embodiments, the sharing platform can be configured as a node of the index blockchain, that is, the sharing platform maintains an index blockchain ledger corresponding to the index blockchain. Accordingly, the data requester member can generate a corresponding ciphertext index (for example, a hash value of specific information) based on the specific information of the known target data (for example, when the target data is a transaction record, the specific information can include a transaction user ID corresponding to the transaction record), and initiate a query request to the sharing platform. The query request includes the ciphertext index to instruct the sharing platform to query, from the index blockchain, an index information set that includes the ciphertext index. That is, the sharing platform queries the index blockchain ledger based on the ciphertext index, and queries the index information set corresponding to the ciphertext index. Or the data requester member can request to download ledger data (that is, data of the index blockchain ledger) of the index blockchain maintained by the sharing platform, and the data requester itself queries the ledger data based on a ciphertext index, so as to query an index information set that includes the ciphertext index.

In some embodiments, the data requester is configured as a node of the index blockchain. Correspondingly, the data requester member can generate a corresponding ciphertext index based on the specific information of the known target data, and query, based on the ledger data of the index blockchain maintained by the data requester, an index information set that includes the ciphertext index, without relying on the sharing platform.

In some embodiments, because the private data is maintained by each member, and the sharing platform can only access index information (included in the previous index information set) corresponding to the private data, the sharing platform can be prevented from obtaining the private data and breaching the private data. In addition, by using the index blockchain to record the index information set, a chaining data structure of the blockchain can be used to ensure that an index information set that has already been recorded as ledger data on the blockchain cannot be randomly modified, and can be queried and verified by the sharing platform and each member, which has extremely high reliability. In addition, in the index information set recorded in the index blockchain, index information related to the private data is a ciphertext index and presented in the form of ciphertext, so content of the private data actually held by the data provider is not disclosed to the sharing platform, and the type of data requested by the data requester is also not disclosed, which ensures extremely high privacy.

Step 304: Forward a data acquisition request initiated by a data requester to the data provider, where the data acquisition request includes the ciphertext index of the target data.

In some embodiments, the index information set is determined so the data requester can retrieve information about the data provider included in the index information set, that is, the data provider corresponding to the target data is determined, so a data acquisition request for the data provider is initiated to the sharing platform.

In some embodiments, the data acquisition request further includes an identity public key of the data requester and a signature of the data requester generated by using an identity private key of the data requester, so after obtaining the data acquisition request forwarded by the sharing platform, the data provider can extract the identity public key from the data acquisition request to authenticate the signature of the data requester, and if the authentication succeeds, the data provider determines that the data acquisition request is actually from the data requester. Certainly, in some cases, the data acquisition request does not have to include the identity public key of the data requester, for example, can include a unique identifier corresponding to the data requester, and thus the data provider can select the pre-obtained identity public key of the data requester, to verify the signature of the data requester.

Step 306: Return response data provided by the data provider to the data requester, where the response data is encrypted by an identity public key of the data requester.

In some embodiments, the data provider determines a plaintext index based on the ciphertext index included in the data acquisition request and a mapping relationship between a ciphertext index maintained by the data provider and a plaintext index, and queries corresponding private data based on the plaintext index, so as to return the private data as the response data to the sharing platform, so the sharing platform forwards the response data to the data requester. Certainly, the data provider can also maintain a mapping relationship between a ciphertext index and private data, so as to directly query corresponding private data based on the ciphertext index.

In some embodiments, the response data is encrypted by using the identity public key of the data requester, so only the data requester can decrypt the response data by using the identity private key of the data requester. Therefore, even if the sharing platform forwards the response data, the sharing platform can only obtain the response data in the encrypted state, thereby reducing the possibility of exfiltration or breach of the private data at the sharing platform.

In some embodiments, the response data further includes a signature of the data provider generated by using an identity private key of the data provider, so the data requester can perform authentication based on an identity public key of the data provider, and if the authentication succeeds, the data requester determines that the response data is actually from the data provider.

In some embodiments, the index information set includes a hash value of the target data; and the data requester can perform hash computation on decrypted data corresponding to the response data, and compare a computed hash value with the hash value in the index information set. When the computed hash value is consistent with the hash value in the index information set, it can be determined that the decrypted data is the target data, which indicates that the data provider does have related data and does not inadvertently or intentionally provide incorrect data. In addition, no data damage or data replacement occurs in the data transmission process, which can also indicate that content of the index information set provided by the data provider to the index blockchain is consistent with content of private data actually owned, and there is no deceit behavior.

In some embodiments, the sharing platform can receive a complaint request for the target data initiated by the data requester to the sharing platform, where the complaint request includes a complaint reason and related data. When the complaint reason is verified to be legitimate based on the related data, an invalid identifier is added to the index information set in the index blockchain. The types of the related data included in the complaint request may vary with complaint reasons, and need to be determined based on actual situations. For example, when the complaint reason is that data is repeated, the related data can include information about data held by the data requester and information about data involved in a complaint, so when it is determined that the two are consistent with each other and an index information set of the data held by the data requester has a relatively small block height on the index blockchain (that is, submitted to the index blockchain earlier), it can be determined that the complaint reason is legitimate. For another example, when the complaint reason is that the data is inconsistent, the related data can include the target data obtained by the data requester, a corresponding index information set, a history record of the target data obtained by the data requester from the data provider, etc., so the sharing platform can determine, based on the history record, that the target data is from the data provider, and the sharing platform can compute a hash value of the target data and compare the computed hash value with a hash value included in the index information set. Therefore, when the comparison result is that they are inconsistent, it is determined that the complaint reason is legitimate.

In some embodiments, the sharing platform can determine a data sharing event between the data requester and the data provider and publish the data sharing event to the transaction blockchain, where the sharing platform is configured as a node of the transaction blockchain. The transaction blockchain is different from the previous index blockchain, and the transaction blockchain is used to record a data sharing event among members, so as to perform subsequent query and verification. By using the index blockchain and the transaction blockchain independent of each other, data of the index information set and data of the data sharing event can be separated from each other. In particular, the index blockchain needs to frequently perform an index query operation, which helps improve query efficiency of the index information set. Certainly, only a single blockchain can be used, and both the index information set and the data sharing event are recorded in the blockchain, which is not limited in the present specification.

It is worthwhile to note that the transaction described in the present specification refers to a piece of data that is created by a user by using a blockchain client device and that needs to be finally published to a distributed database of the blockchain. Transactions in the blockchain include transactions in a narrow sense and transactions in a broad sense. A transaction in a narrow sense refers to a value transfer published by a user to the blockchain. For example, in a conventional Bitcoin blockchain network, a transaction can be a transfer initiated by a user in the blockchain. A transaction in a broad sense refers to service data that is published by a user to the blockchain and that has a service intention. For example, an operator can establish a consortium blockchain based on actual service needs, and deploy some other types of online services (for example, a data sharing service, a house rental service, a vehicle scheduling service, an insurance claim service, a credit service, and a medical service) that are not related to value transfer in the consortium blockchain. In such consortium blockchain, a transaction can be a service message or a service request that is published by a user in the consortium blockchain and that has a service intention.

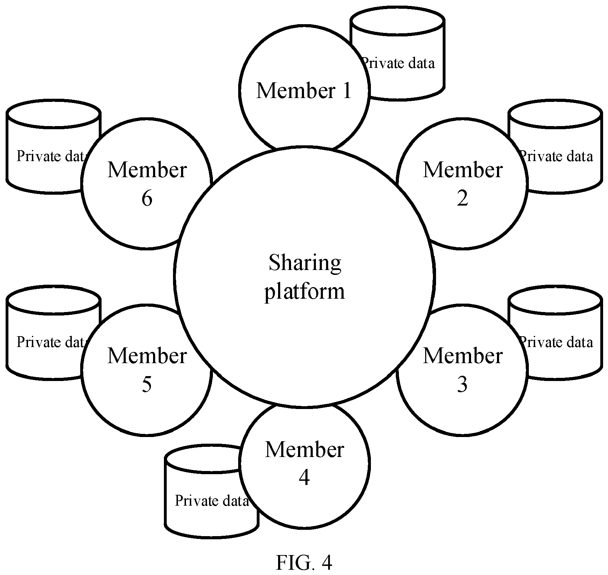

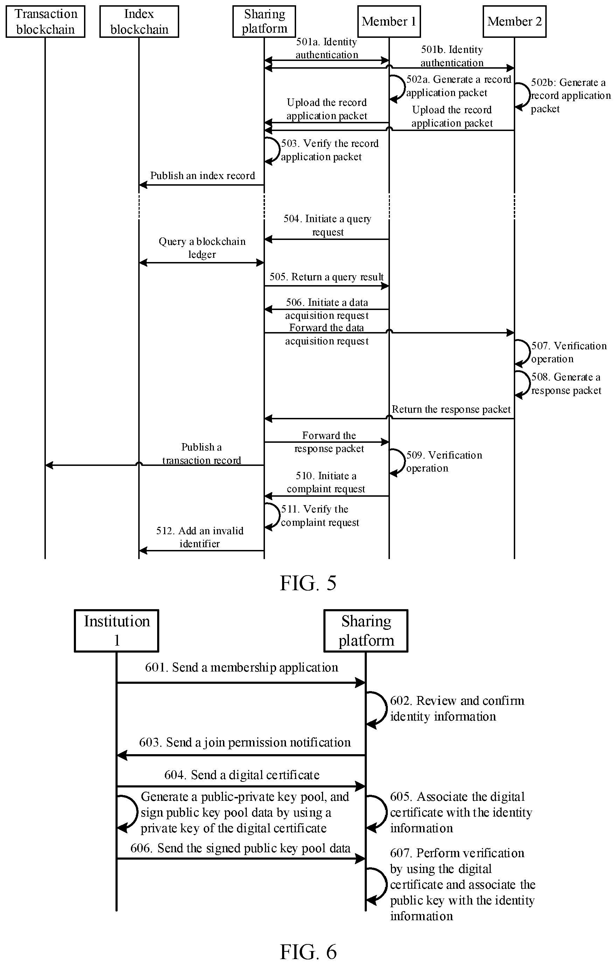

For ease of understanding, a data sharing system is used as an example to describe technical solutions in one or more embodiments of the present specification. FIG. 4 is a schematic structural diagram illustrating a data sharing system, according to some example embodiments. As shown in FIG. 4, the data sharing system can include a sharing platform and several members, for example, member 1-member 6 shown in FIG. 4. Each member respectively maintains sharable private data, and the sharing platform is separately connected to each member, thereby implementing data sharing among the members. FIG. 5 is a schematic interaction diagram illustrating a data sharing process, according to some example embodiments. As shown in FIG. 5, the data sharing process can include the following steps:
Step 501a: Institution 1 performs identity authentication on a sharing platform, and joins as member 1 associated with the sharing platform.

In some embodiments, a member in a data sharing system can include an institution for managing data; or a member in a data sharing system can further include an individual, another type of organization other than an institution, etc., which is not limited in the present specification.

Using institution 1 as an example, FIG. 6 is a schematic interaction diagram illustrating identity authentication, according to some example embodiments. As shown in FIG. 6, in step 601, institution 1 sends a membership application to the sharing platform, and the membership application can include identity certificate information of institution 1 (such as a service license, legal person information, and a qualification certificate, which is not limited in the present specification), so the sharing platform can verify the identity information of institution 1 accordingly. In step 602, the sharing platform reviews and confirms the identity information of institution 1 based on the membership application. In step 603, after verifying that the identity information is correct, the sharing platform sends a join permission notification to institution 1. In step 604, institution 1 sends a digital certificate to the sharing platform, and the digital certificate can be issued by a third-party certificate authority (CA) or generated by institution 1 itself, which is not limited in the present specification. In step 605, the sharing platform associates the digital certificate with the identity information of institution 1 (namely, the identity information verified in step 602). In step 606, institution 1 signs public key pool data for a pre-generated public-private key pool (including any quantity of public-private key pairs) by using a private key of the digital certificate, and sends the signed public key pool data to the sharing platform. In step 607, the sharing platform performs signature verification on the public key pool data by using a public key of the digital certificate, and after the verification succeeds, associates a public key included in the public key pool data with the identity information of institution 1, so as to use the public key as the identity of institution 1. In the previous interaction process, institution 1 can complete identity authentication on the sharing platform, so institution 1 is authenticated as a member associated with the sharing platform, for example, member 1.

Step 501b: Institution 2 performs identity authentication on the sharing platform, and joins as a member 2 associated with the sharing platform.

In some embodiments, institution 2 can be authenticated as member 2 by using a similar method and process to those of institution 1. Similarly, another institution can be authenticated as a corresponding member, and details are omitted here for simplicity.

Step 502a: Member 1 generates a record application packet, and uploads the record application packet to the sharing platform.

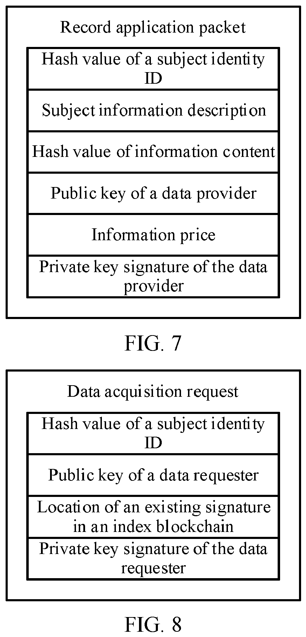

In some embodiments, member 1 maintains certain private data, and to share the private data, member 1 can generate a corresponding record application packet for the private data maintained by member 1, so the sharing platform publishes the record application packet to an index blockchain. For example, FIG. 7 is a schematic structural diagram illustrating a record application packet, according to some example embodiments. As shown in FIG. 7, the record application packet can include a hash value of a subject identity ID, subject description information, a hash value of information content, a public key of a data provider, an information price, a private key signature of the data provider, etc. This is not limited in the present specification.

Step 502b: Member 2 generates a record application packet, and uploads the record application packet to the sharing platform.

In some embodiments, member 2 can generate a record application packet of the structure shown in FIG. 7 for private data maintained by member 2. Similarly, another member can generate a record application packet for private data maintained by itself. Details are omitted here for simplicity.

Step 503: The sharing platform verifies the received record application packet, and publishes an index record to an index blockchain for a verified record application packet.

In some embodiments, the sharing platform can extract "the public key of the data provider" included in the record application packet to verify whether the public key is in a member public key pool that includes public keys of all authenticated members. If the public key is in the member public key pool, it indicates that the public key belongs to a valid member. Then, the sharing platform can verify, by using the public key, "the private key signature of the data provider" included in the record application packet, and after the verification succeeds, determine that the record application packet actually comes from the corresponding member. If the verification fails, the sharing platform can discard the corresponding record application packet.

In some embodiments, the sharing platform can generate a corresponding index record for a verified record request packet. Because the sharing platform has been configured as a blockchain node of the index blockchain, the sharing platform can submit, to the index blockchain, a blockchain transaction including the index record, so as to publish the index record to the index blockchain, so the index record is recorded in a blockchain ledger corresponding to the index blockchain.

The record application packet uploaded by member 1 is used as an example.

In some embodiments, the index record can include "the hash value of the subject identity ID" in the record application packet. The "subject identity ID" is index information of the private data maintained by member 1. For example, when the private data is a merchant sales record, the subject identity ID can include a "merchant ID+ payment account". By generating a corresponding hash value, the index information "subject identity ID" is processed as a corresponding ciphertext index, that is, the previous "hash value of the subject identity ID". The index record can further include a service address of member 1, and the service address is used to point to member 1, so another member can initiate a data acquisition request to member 1. Because the record application packet is sent by member 1 to the sharing platform, when generating a corresponding index record for the record application packet, the sharing platform can automatically add the service address of member 1 to the index record.

In some embodiments, in addition to the ciphertext index and the service address, the index record can also include "the subject information description" in the record application packet. The "subject information description" is used to describe, to a certain extent, the private data maintained by member 1, and is equivalent to a content declaration of member 1 for the private data, so another member determines whether to obtain the related private data. For example, for the previous merchant sales record, the subject information description can include "records of May 2018 and June 2018", indicating that the subject information description is corresponding to the merchant sales records in this time period.

In some embodiments, in addition to the ciphertext index and the service address, the index record can also include "the hash value of information content" in the record application packet. The "information content" is the private data maintained by member 1. With the hash value of the private data, the data requester can verify integrity and correctness of the data content after obtaining the related private data. This will be described in step 509.

In some embodiments, in addition to the ciphertext index and the service address, the index record can also include the information price, and the information price indicates a price paid by another member to obtain corresponding private data. The price can be presented in multiple forms, for example, a certain amount of asset certificate (such as a member bonus point, a cash coupon, and a currency balance), performing of a predetermined operation, and provision of specified data, etc. This is not limited in the present specification.

For the record application packet uploaded by member 2 or another member, the sharing platform can generate a corresponding index record and publish the index record to the index blockchain. For a generation process and content of the index record, refer to the previous description. Details are omitted here for simplicity.

Step 504: The sharing platform queries, based on a query request initiated by member 1, a blockchain ledger corresponding to the index blockchain.

Step 505: The sharing platform returns a corresponding query result to member 1 based on the query status of the blockchain ledger.

In some embodiments, the sharing platform serves as a blockchain node of the index blockchain to maintain the blockchain ledger of the index blockchain. The blockchain ledger contains full data of the index blockchain, that is, records all index records uploaded to the index blockchain by the sharing platform.

In some embodiments, member 1 can retrieve at least a part of information of private data that member 1 needs to query. For example, for the previous merchant sales record, member 1 can retrieve "the merchant ID+ payment account", that is, the previous subject identifier ID. Accordingly, the query request initiated by member 1 can include the hash value of the subject identity ID, so the sharing platform can retrieve the blockchain ledger based on the hash value, so as to obtain a corresponding index record, and return a query result that includes the index record to member 1.

Step 506: The sharing platform obtains a data acquisition request initiated by member 1, and forwards the data acquisition request to a corresponding data provider.

In some embodiments, member 1 obtains, based on the index record included in the query result, the service address included in the index record, so member 1 can initiate a data acquisition request to the service address. The service address is maintained by the sharing platform, and the sharing platform can determine a mapping relationship between the service address and a related member. For example, when the service address is corresponding to member 2, if the sharing platform receives the data acquisition request initiated by member 1 to the service address, the sharing platform can forward the data acquisition request to member 2, that is, member 2 is used as a corresponding data provider.

Step 507: Member 2 performs a verification operation on the received data acquisition request.

In some embodiments, FIG. 8 is a schematic structural diagram illustrating a data acquisition request packet, according to some example embodiments. As shown in FIG. 8, the data acquisition request packet is an expression form of a data structure of the previous data acquisition request, and can include a hash value of a subject identity ID, a public key of a data requester, a location of an existing signature in an index blockchain, a private key signature of the data requester, etc. This is not limited in the present specification. For the data acquisition request packet shown in FIG. 8, the verification operation performed by member 2 can include: determining, based on "the location of the existing signature in the index blockchain", that the corresponding data requester is a valid member on the sharing platform; and extracting "the public key of the data requester" and verifying "the private key signature of the data requester".

Step 508: Member 2 generates a response packet and returns the response packet to the sharing platform, so the sharing platform forwards the response packet to member 1.

In some embodiments, member 2 can extract "the hash value of the subject identity ID" included in the data acquisition request, and retrieve, based on the ciphertext index, the private data maintained by member 2, so as to determine corresponding response data. Certainly, the private data maintained by member 2 does not necessarily support a ciphertext index-based retrieval operation. For example, member 2 can maintain a mapping relationship between a ciphertext index and a plaintext index, accordingly determine a plaintext index corresponding to the ciphertext index, and then retrieve the private data based on the plaintext index, so as to determine the corresponding response data.

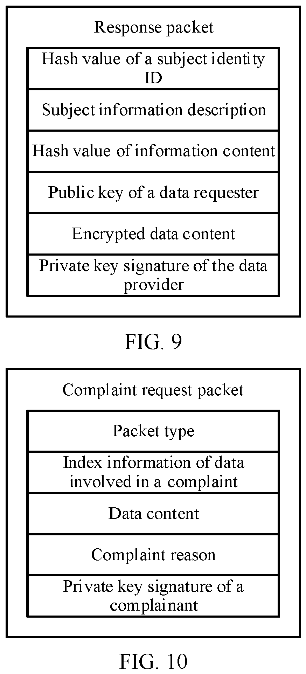

In some embodiments, member 2 encapsulates the retrieved response data to generate a corresponding response packet. For example, FIG. 9 is a schematic structural diagram illustrating a response packet, according to some example embodiments. As shown in FIG. 9, the response packet can include a hash value of a subject identity ID, a subject information description, a hash value of information content, etc., so member 1 determines an index record corresponding to the response packet. The response packet can include the public key of the data requester, so the sharing platform determines, based on the public key, that a sending target of the response packet is member 1, so as to send the response packet to member 1. The response packet can include encrypted data content, which is obtained after member 2 encrypts the response data based on the public key of the data requester. The response packet can include a private key signature of the data provider, that is, a private key signature of member 2.

Step 509: Member 1 performs a verification operation on the received response packet.

In some embodiments, the verification operation for the response packet by member 1 can include: verifying the private key signature based on the public key of the data provider, and if the verification succeeds, indicating that the response packet does come from the corresponding data provider. The encrypted data content is decrypted by using the public key of member 1 to obtain decrypted data, that is, the response data provided by member 2. Because member 1 may have multiple public keys, the public key of the data requester included in the response packet can be verified. When it is determined that the public key is a public key owned by member 1, the public key is used to decrypt the encrypted data content.

In some embodiments, after the decrypted data is obtained, member 1 can generate a hash value of the decrypted data and compare the hash value with "the hash value of the information content" in the response packet. When the comparison result is that they are consistent with each other, it can be determined that the response packet is not damaged during transmission. Member 1 can compare the hash value of the decrypted data with "the hash value of the information content" included in the previously obtained index record. When the comparison result is that they are consistent with each other, it can be determined that member 2 provides correct data, and the response packet is not maliciously replaced during transmission.

In some embodiments, member 1 can determine description content of the decrypted data. For example, when the decrypted data is a merchant sales record, the description can include months corresponding to the merchant sales record. If the months are "May 2018 and June 2018", and the subject information is described as "records of May 2018 and June 2018", it indicates that the data provided by member 2 is consistent with the information declared by member 2 in the index blockchain.

In some embodiments, corresponding to "the information price" shown in FIG. 7, member 1 needs to pay a related price to member 2 before obtaining the data provided by member 2. Using the member bonus point as an example, the sharing platform can be used as a third party among members, so member 1 can transfer a corresponding amount of member bonus points to the sharing platform based on the information price marked in the index record, so the sharing platform forwards the data acquisition request to member 2. After member 2 returns the response packet, or after member 1 confirms that the response packet is received, the sharing platform can transfer the corresponding member bonus points to member 2. This is equivalent to that a data sharing transaction is completed between member 1 and member 2. Correspondingly, when the sharing platform is configured as a blockchain node of a transaction blockchain, the sharing platform can submit a blockchain transaction to the transaction blockchain. The blockchain transaction includes a transaction record of the previous data sharing transaction between member 1 and member 2, so the data sharing transaction is recorded reliably and can be queried and checked at any time.

Step 510: Member 1 can initiate a complaint request to the sharing platform.

Step 511: The sharing platform can verify the complaint request.

Step 512: When the complaint request is confirmed to be verified, the sharing platform can add an invalid identifier to the corresponding index record in the index blockchain.

In some embodiments, FIG. 10 is a schematic structural diagram illustrating a complaint request packet, according to some example embodiments. As shown in FIG. 10, the complaint request packet is an expression form of a data structure of the previous complaint request, and can include: a packet type, used to indicate that a type of the current data packet is "a complaint request packet"; index information of data involved in a complaint, such as a ciphertext index or an index record corresponding to the data involved in a complaint; data content, such as plaintext data content; a complaint cause, for example, obtained data is inconsistent with "a subject information description" in the index record, the obtained data is false data, or the obtained data is the same as data maintained by a member itself or another member (for example, after member 2 buys data from member 1, member 2 generates and uploads a corresponding record application packet, so as to add the data as data maintained by member 2, which infringes the rights and interests of member 1), which is not limited in the present specification; and a private key signature of a complainant.

For example, when the complaint cause is that the obtained data is inconsistent with "the subject information description" in the index record, the sharing platform can obtain the related index record based on "the index information of the data involved in a complaint", extract the hash value of the related data, and compute a hash value of the plaintext data content in "the data content". If the two hash values are consistent with each other, it indicates that the plaintext data content is data corresponding to the related index record. Further, the sharing platform can compare the plaintext data content with "the subject information description" declared in the index record, so as to determine whether the plaintext data content is inconsistent with "the subject information description".

In some embodiments, after the complaint request is confirmed to be verified, the sharing platform can submit a blockchain transaction to the index blockchain, where content of the blockchain transaction includes: adding an invalid identifier to the index record of the data involved in a complaint, so status parameters corresponding to "the index record of the data involved in a complaint" in the blockchain ledger changes, that is, is marked as an invalid state. In a subsequent data sharing process, the index record marked as an invalid state cannot be shared, and can be filtered and checked by the sharing platform.

Further, the sharing platform can further impose disciplinary measures on the data provider of the data involved in a complaint, such as limiting a range of data available to the data provider, increasing a price for the data provider to obtain data, and depriving the data provider of its membership. This is not limited in the present specification.

In some embodiments, in addition to the complaint initiated by a member, the sharing platform can monitor the data sharing process to ensure standardization and quality of data provided by members, punish members who maliciously provide duplicate data, etc. For example, the sharing platform can check suspicious data or its data provider at the request of a member. For another example, to perform spot check on the data, the sharing platform can act as an ordinary member to obtain related data from a related member, and verify standardization, authenticity, consistency, etc. of data.

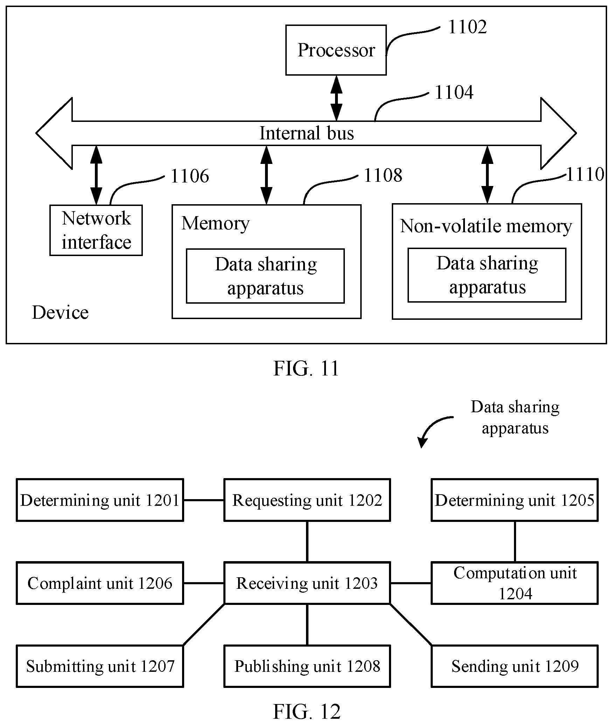

FIG. 11 is a schematic structural diagram illustrating a device, according to some example embodiments. Referring to FIG. 11, in terms of hardware, the device includes a processor 1102, an internal bus 1104, a network interface 1106, a memory 1108, and a non-volatile memory 1110, and certainly may further include hardware needed by other services. The processor 1102 reads a corresponding computer program from the non-volatile memory 1110 to the memory 1108, and then runs the computer program to logically form a data sharing device based on a ring signature. Certainly, in addition to a software implementation, one or more embodiments of the present specification do not exclude other implementations, for example, a logic device or a combination of hardware and software. That is, an execution body of the following processing procedure is not limited to each logical unit, and can also be hardware or a logic device.

Referring to FIG. 12, in a software implementation, the data sharing apparatus is applied to a data requester member, and the apparatus can include: a determining unit 1201, configured to determine an index information set corresponding to target data and recorded in an index blockchain, where the index information set includes a ciphertext index of the target data and member information of a data provider of the target data, and the index information set is shared by the data provider to the index blockchain; a requesting unit 1202, configured to initiate a data acquisition request to the data provider by using a sharing platform, where the data acquisition request includes the ciphertext index of the target data; and a receiving unit 1203, configured to receive response data returned by the sharing platform, where the response data is encrypted by an identity public key of the data requester.

Optionally, the sharing platform is configured as a node of the index blockchain; and the determining unit 1201 is specifically configured to: generate a corresponding ciphertext index based on specific information of the known target data; and initiate a query request to the sharing platform, where the query request includes the ciphertext index to instruct the sharing platform to query, from the index blockchain, an index information set including the ciphertext index; or downloading ledger data of the index blockchain maintained by the sharing platform, so as to query the index information set that includes the ciphertext index.

Optionally, the data requester is configured as a node of the index blockchain; and the determining unit 1201 is specifically configured to: generate a corresponding ciphertext index based on specific information of the known target data; and query, based on ledger data of the index blockchain maintained by the data requester, an index information set that includes the ciphertext index.

Optionally, the data acquisition request further includes the identity public key of the data requester and a signature of the data requester generated by using an identity private key of the data requester, to facilitate verification by the data provider.

Optionally, the response data further includes a signature of the data provider generated by using an identity private key of the data provider, to facilitate verification by the data requester.

Optionally, the index information set includes a hash value of the target data; and the apparatus further includes: a computation unit 1204, configured to perform hash computation on decrypted data corresponding to the response data; and a determining unit 1205, configured to: when a computed hash value is consistent with the hash value in the index information set, determine that the decrypted data is the target data.

Optionally, the apparatus further includes: a complaint unit 1206, configured to initiate a complaint request for the target data to the sharing platform, where the complaint request includes a complaint reason and related data; where when the complaint reason is verified to be legitimate based on the related data by the sharing platform or a smart contract invoked by the sharing platform from the index blockchain, the index information set is added with an invalid identifier in the index blockchain.

Optionally, the apparatus further includes: a submitting unit 1207, configured to submit a transaction of a complaint type to the index blockchain to invoke a smart contract for processing a complaint, where the transaction includes a complaint reason and related data; and the smart contract is used to verify the complaint reason based on the related data, and when the complaint reason is verified to be legitimate, the index information set is added with an invalid identifier in the index blockchain.

Optionally, the apparatus further includes: a publishing unit 1208 or a sending unit 1209.

The publishing unit 1208 is configured to publish a data sharing event between the data requester and the data provider to a transaction blockchain, where the data requester is configured as a node of the transaction blockchain; and the sending unit 1209 is configured to send the data sharing event to the sharing platform, so the sharing platform publishes the data sharing event to the transaction blockchain, where the sharing platform is configured as a node of the transaction blockchain.

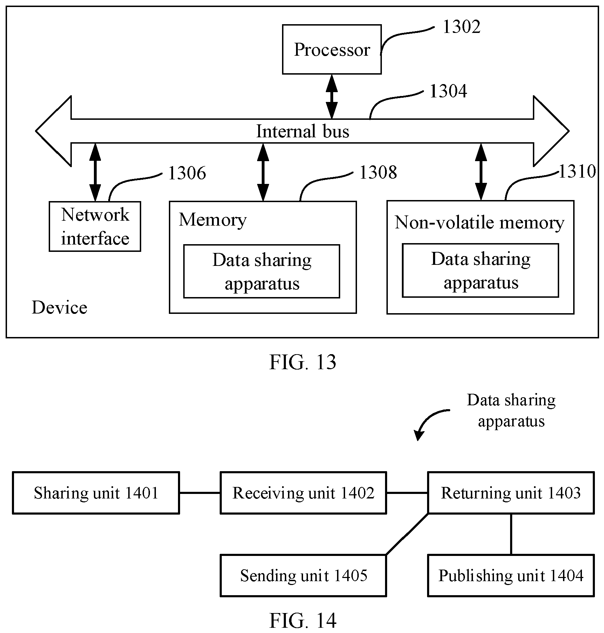

FIG. 13 is a schematic structural diagram illustrating a device, according to some example embodiments. Referring to FIG. 13, in terms of hardware, the device includes a processor 1302, an internal bus 1304, a network interface 1306, a memory 1308, and a non-volatile memory 1310, and certainly may further include hardware needed by other services. The processor 1302 reads a corresponding computer program from the non-volatile memory 1310 to the memory 1308, and then runs the computer program to logically form a data sharing device based on a ring signature. Certainly, in addition to a software implementation, one or more embodiments of the present specification do not exclude other implementations, for example, a logic device or a combination of hardware and software. That is, an execution body of the following processing procedure is not limited to each logical unit, and can also be hardware or a logic device.

Referring to FIG. 14, in a software implementation, the data sharing apparatus is applied to a data provider member, and the apparatus can include: a sharing unit 1401, configured to share an index information set corresponding to target data into an index blockchain, where the index information set includes a ciphertext index of the target data and member information of the data provider; a receiving unit 1402, configured to receive a data acquisition request initiated by a data requester by using a sharing platform, where the data acquisition request includes the ciphertext index of the target data; and a returning unit 1403, configured to return response data to the data requester by using the sharing platform, where the response data is encrypted by an identity public key of the data requester.

Optionally, the data acquisition request further includes the identity public key of the data requester and a signature of the data requester generated by using an identity private key of the data requester, to facilitate verification by the data provider.

Optionally, the response data further includes a signature of the data provider generated by using an identity private key of the data provider, to facilitate verification by the data requester.

Optionally, the sharing unit 1401 is specifically configured to: publish the index information set to the index blockchain, where the data provider is configured as a node of the index blockchain; or submit the index information set to the sharing platform, so the sharing platform publishes the index information set to the index blockchain, where the sharing platform is configured as a node of the index blockchain.

Optionally, the apparatus further includes: a publishing unit 1404 or a sending unit 1405.

The publishing unit 1404 is configured to publish a data sharing event between the data requester and the data provider to a transaction blockchain, where the data provider is configured as a node of the transaction blockchain; and the sending unit 1405 is configured to send the data sharing event to the sharing platform, so the sharing platform publishes the data sharing event to the transaction blockchain, where the sharing platform is configured as a node of the transaction blockchain.

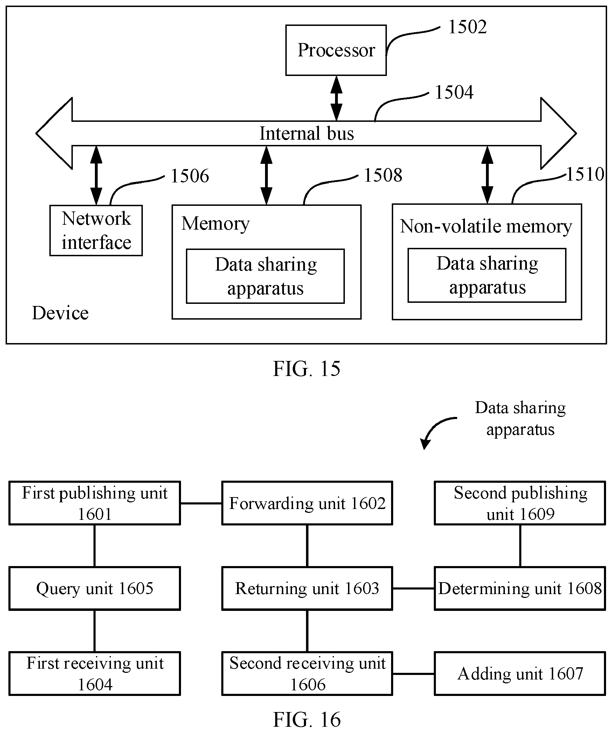

FIG. 15 is a schematic structural diagram illustrating a device, according to some example embodiments. Referring to FIG. 15, in terms of hardware, the device includes a processor 1502, an internal bus 1504, a network interface 1506, a memory 1508, and a non-volatile memory 1510, and certainly may further include hardware needed by other services. The processor 1502 reads a corresponding computer program from the non-volatile memory 1510 to the memory 1508, and then runs the computer program to logically form a data sharing device based on a ring signature. Certainly, in addition to a software implementation, one or more embodiments of the present specification do not exclude other implementations, for example, a logic device or a combination of hardware and software. That is, an execution body of the following processing procedure is not limited to each logical unit, and can also be hardware or a logic device.

Referring to FIG. 16, in a software implementation, the data sharing apparatus is applied to a sharing platform, and the apparatus can include: a first publishing unit 1601, configured to publish an index information set corresponding to target data to an index blockchain, where the index information set includes a ciphertext index of the target data and member information of a data provider of the target data, and the index information set is submitted by the data provider to the sharing platform; a forwarding unit 1602, configured to forward a data acquisition request initiated by a data requester to the data provider, where the data acquisition request includes the ciphertext index of the target data; and a returning unit 1603, configured to return response data provided by the data provider to the data requester, where the response data is encrypted by an identity public key of the data requester.

Optionally, the apparatus further includes: a first receiving unit 1604, configured to receive a query request initiated by the data requester, where the query request includes a ciphertext index generated based on specific information of the known target data; and a query unit 1605, configured to query an index information set including the ciphertext index from the index blockchain to inform the data requester.

Optionally, the apparatus further includes: a second receiving unit 1606, configured to receive a complaint request for the target data initiated by the data requester to the sharing platform, where the complaint request includes a complaint reason and related data; and an adding unit 1607, configured to: when the complaint reason is verified to be legitimate based on the related data, add an invalid identifier to the index information set in the index blockchain.

Optionally, the apparatus further includes: a determining unit 1608, configured to determine a data sharing event between the data requester and the data provider; and a second publishing unit 1609, configured to publish the data sharing event to a transaction blockchain, where the sharing platform is configured as a node of the transaction blockchain.

The system, device, module, or unit illustrated in the previous embodiments can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

In a typical configuration, the computer includes one or more processors (CPU), an input/output interface, a network interface, and a memory.

The memory may include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD) or another optical storage, a cassette tape, a magnetic disk storage, a quantum memory, a storage medium based on grapheme, another magnetic storage device, or any other non-transmission medium. The computer storage medium can be used to store information that can be accessed by the computing device. Based on the definition in the present specification, the computer readable medium does not include transitory computer readable media (transitory media) such as a modulated data signal and carrier.

It is worthwhile to further note that, the terms "include", "contain", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

Specific embodiments of the present specification are described above. Other embodiments fall within the scope of the appended claims. In some situations, the actions or steps described in the claims can be performed in an order different from the order in the embodiments and the desired results can still be achieved. In addition, the process depicted in the accompanying drawings does not necessarily need a particular execution order to achieve the desired results. In some implementations, multi-tasking and concurrent processing is feasible or may be advantageous.

Terms used in one or more embodiments of the present specification are merely used to describe specific embodiments, and are not intended to limit the one or more embodiments of the present specification. The terms "a" and "the" of singular forms used in one or more embodiments of the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. may be used in one or more embodiments of the present specification to describe various types of information, the information is not limited to these terms. These terms are only used to distinguish between information of the same type. For example, without departing from the scope of one or more embodiments of the present specification, first information can also be referred to as second information, and similarly, the second information can be referred to as the first information. Depending on the context, for example, the word "if" used here can be explained as "while", "when", or "in response to determining".

The previous descriptions are only example embodiments of one or more embodiments of the present specification, but are not intended to limit the one or more embodiments of the present specification. The scope of protection sought for is defined by the appended claims.

## Claims

1. A data sharing system, comprising:
members, wherein each member respectively is configured to maintain sharable private data, and to generate corresponding ciphertext index information for the shareable private data, the corresponding ciphertext index information comprising a ciphertext index of the shareable private data and information about a member that provides the shareable private data; and
a sharing platform, wherein the sharing platform is connected to each member and being configured to record ciphertext index information generated by each member in an index blockchain for sharing among all members; the sharing platform configured to forward a data acquisition request initiated by a data requester member to a data provider member; the data acquisition request comprising a ciphertext index of target data, and the sharing platform further configured to forward the target data corresponding to the data acquisition request returned by the data provider member to the data requester member, wherein the target data is encrypted by an identity public key of the data requester member,
**characterised in that**
the index blockchain is configured to receive a transaction of a complaint type for the target data, wherein the transaction comprises a complaint reason and related data, and wherein the transaction invokes a smart contract for processing the complaint,
and wherein the smart contract is used to verify the complaint reason based on the related data, and when the complaint reason is verified to be legitimate, an index information set corresponding to the target data shared in the index blockchain is added with an invalid identifier in the index blockchain, the index information set comprising a ciphertext index of the target data and member information of the data provider member.

2. The data sharing system according to claim 1, wherein the sharing platform is configured as a blockchain node of the index blockchain; and the sharing platform is configured to obtain ciphertext index information generated by each member, and configured to publish the ciphertext index information to the index blockchain; wherein
the sharing platform is configured to query, based on an information query request initiated by any member, corresponding ciphertext index information in an index blockchain ledger maintained by the sharing platform, and to return the ciphertext index information to the any member; and/or at least one member is configured to download the index blockchain ledger maintained by the sharing platform to query ciphertext index information.

3. The data sharing system according to claim 1, wherein the sharing platform and each member are configured as blockchain nodes of the index blockchain, respectively; and each member being configured to separately publish generated ciphertext index information to the index blockchain, and to query ciphertext index information by using an index blockchain ledger maintained by the member; and/or wherein the sharing platform is configured as a blockchain node of a transaction blockchain; and the sharing platform further being configured to record a data sharing event between the data requester member and the data provider member into the transaction blockchain.

4. A data sharing method applied to a data requester member, the method comprising:
determining (102) an index information set corresponding to target data and recorded in an index blockchain, wherein the index information set comprises a ciphertext index of the target data and member information of a data provider of the target data, and the index information set is shared by the data provider to the index blockch ain;
initiating (104) a data acquisition request to the data provider by using a sharing platform, wherein the data acquisition request comprises the ciphertext index of the target data;
receiving (106) response data returned by the sharing platform, wherein the response data corresponds to the data acquisition request and is encrypted by an identity public key of the data requester member;
**characterised by**
submitting a transaction of a complaint type for the response data to the index blockchain to invoke a smart contract for processing a complaint, wherein the transaction comprises a complaint reason and related data; and
the smart contract is used to verify the complaint reason based on the related data, and when the complaint reason is verified to be legitimate, the index information set is added with an invalid identifier in the index blockchain.

5. The method according to claim 4, wherein the sharing platform is configured as a node of the index blockchain; and the determining an index information set corresponding to target data and recorded in an index blockchain comprises:
generating a corresponding ciphertext index based on specific information of known target data; and
initiating a query request to the sharing platform, wherein the query request comprises the ciphertext index to instruct the sharing platform to query, from the index blockchain, an index information set comprising the ciphertext index; or downloading ledger data of the index blockchain maintained by the sharing platform, so as to query the index information set that comprises the ciphertext index.

6. The method according to claim 4, wherein the data requester member is configured as a node of the index blockchain; and the determining an index information set corresponding to target data and recorded in an index blockchain comprises:
generating a corresponding ciphertext index based on specific information of known target data; and
querying, based on ledger data of the index blockchain maintained by the data requester member, an index information set that comprises the ciphertext index.

7. The method according to claim 4, wherein the data acquisition request further comprises the identity public key of the data requester member and a signature of the data requester member generated by using an identity private key of the data requester member, to facilitate verification by the data provider; and/or
wherein the response data further comprises a signature of the data provider generated by using an identity private key of the data provider, to facilitate verification by the data requester member.

8. The method according to claim 4, wherein the index information set comprises a hash value of the target data; and the method further comprises:
performing hash computation on decrypted data corresponding to the response data; and
when a computed hash value is consistent with the hash value in the index information set, determining that the decrypted data is the target data.

9. The method according to claim 4, further comprising:
initiating a complaint request for the target data to the sharing platform, wherein the complaint request comprises a complaint reason and related data; wherein
when the complaint reason is verified to be legitimate based on the related data by the sharing platform or a smart contract invoked by the sharing platform from the index blockchain, the index information set is added with an invalid identifier in the index blockchain.

10. The method according to claim 4, further comprising:
publishing a data sharing event between the data requester member and the data provider to a transaction blockchain, wherein the data requester member is configured as a node of the transaction blockchain; or
sending the data sharing event to the sharing platform, so the sharing platform publishes the data sharing event to the transaction blockchain, wherein the sharing platform is configured as a node of the transaction blockchain.

11. A data sharing method applied to a sharing platform, the method comprising:
publishing (302) an index information set corresponding to target data to an index blockchain, wherein the index information set comprises a ciphertext index of the target data and member information of a data provider of the target data, and the index information set is submitted by the data provider to the sharing platform;
forwarding (304) a data acquisition request initiated by a data requester to the data provider, wherein the data acquisition request comprises the ciphertext index of the target data;
returning (306) response data corresponding to the data acquisition request provided by the data provider to the data requester, wherein the response data is encrypted by an identity public key of the data requester; and
**characterised by**
receiving a transaction of a complaint type for the response data, wherein the transaction comprises a complaint reason and related data, and wherein the transaction invokes a smart contract for processing the complaint,
wherein the smart contract is used to verify the complaint reason based on the related data, and when the complaint reason is verified to be legitimate, the index information set is added with an invalid identifier in the index blockchain.

12. The method according to claim 11, further comprising:
receiving a query request initiated by the data requester, wherein the query request comprises a ciphertext index generated based on specific information of known target data; and
querying an index information set comprising the ciphertext index from the index blockchain to inform the data requester.

13. The method according to claim 11, further comprising:
receiving a complaint request for the target data initiated by the data requester to the sharing platform, wherein the complaint request comprises a complaint reason and related data; and
when the complaint reason is verified to be legitimate based on the related data, adding an invalid identifier to the index information set in the index blockchain; and/or
further comprising:
determining a data sharing event between the data requester and the data provider; and
publishing the data sharing event to a transaction blockchain, wherein the sharing platform is configured as a node of the transaction blockchain.

14. An electronic device, comprising:
a processor; and
a memory, configured to store instructions executable by the processor; wherein
the processor runs the executable instructions to implement the method according to any one of claims 4 to 13.

## Patentansprüche

1. Datenaustauschsystem, umfassend:
Mitglieder, wobei jedes Mitglied jeweils dazu eingerichtet ist, austauschbare private Daten zu verwalten und entsprechende Chiffretext-Indexinformationen für die austauschbaren privaten Daten zu erzeugen, wobei die entsprechenden Chiffretext-Indexinformationen einen Chiffretext-Index der austauschbaren privaten Daten und Informationen über ein Mitglied umfassen, das die austauschbaren privaten Daten bereitstellt; und
eine Austauschplattform, wobei die Austauschplattform mit jedem Mitglied verbunden ist und dazu eingerichtet ist, Chiffretext-Indexinformationen aufzuzeichnen, die von jedem Mitglied in einer Index-Blockchain zum Austauschen unter allen Mitgliedern erzeugt werden; wobei die Austauschplattform dazu eingerichtet ist, eine Datenerfassungsanforderung, die von einem Datenanforderermitglied initiiert wird, an ein Datenanbietermitglied weiterzuleiten; wobei die Datenerfassungsanforderung einen Chiffretext-Index von Zieldaten umfasst, und die Austauschplattform ferner dazu eingerichtet ist, die Zieldaten, die der Datenerfassungsanforderung entsprechen, die vom Datenanbietermitglied zurückgegeben werden, an das Datenanforderermitglied weiterzuleiten, wobei die Zieldaten durch einen öffentlichen Identitätsschlüssel des Datenanforderermitglieds verschlüsselt sind,
**dadurch gekennzeichnet, dass** die Index-Blockchain dazu eingerichtet ist, eine Transaktion eines Beschwerdetyps für die Zieldaten zu empfangen, wobei die Transaktion einen Beschwerdegrund und zugehörige Daten umfasst, und wobei die Transaktion einen Smart Contract zum Verarbeiten der Beschwerde aufruft,
und wobei der Smart Contract verwendet wird, um den Beschwerdegrund basierend auf den zugehörigen Daten zu verifizieren, und wenn verifiziert wird, dass der Beschwerdegrund legitim ist, ein Indexinformationssatz, der den Zieldaten entspricht, die in der Index-Blockchain ausgetauscht werden, mit einer ungültigen Kennung in der Index-Blockchain hinzugefügt wird, wobei der Indexinformationssatz einen Chiffretext-Index der Zieldaten und Mitgliedsinformationen des Datenanbietermitglieds umfasst.

2. Datenaustauschsystem nach Anspruch 1, wobei die Austauschplattform als ein Blockchain-Knoten der Index-Blockchain eingerichtet ist; und die Austauschplattform dazu eingerichtet ist, Chiffretext-Indexinformationen zu erhalten, die von jedem Mitglied erzeugt werden, und dazu eingerichtet ist, die Chiffretext-Indexinformationen in der Index-Blockchain zu veröffentlichen; wobei
die Austauschplattform dazu eingerichtet ist, basierend auf einer Informationsabfrageanforderung, die von einem beliebigen Mitglied initiiert wird, entsprechende Chiffretext-Indexinformationen in einem Index-Blockchain-Ledger abzufragen, der von der Austauschplattform verwaltet wird, und die Chiffretext-Indexinformationen an das beliebige Mitglied zurückzugeben; und/oder mindestens ein Mitglied dazu eingerichtet ist, den Index-Blockchain-Ledger herunterzuladen, der von der Austauschplattform verwaltet wird, um Chiffretext-Indexinformationen abzufragen.

3. Datenaustauschsystem nach Anspruch 1, wobei die Austauschplattform und jedes Mitglied jeweils als Blockchain-Knoten der Index-Blockchain eingerichtet sind; und jedes Mitglied dazu eingerichtet ist, erzeugte Chiffretext-Indexinformationen separat in der Index-Blockchain zu veröffentlichen und Chiffretext-Indexinformationen unter Verwendung eines Index-Blockchain-Ledgers abzufragen, der von dem Mitglied verwaltet wird; und/oder wobei die Austauschplattform als ein Blockchain-Knoten einer Transaktions-Blockchain eingerichtet ist; und die Austauschplattform ferner dazu eingerichtet ist, ein Datenaustauschereignis zwischen dem Datenanforderermitglied und dem Datenanbietermitglied in der Transaktions-Blockchain aufzuzeichnen.

4. Datenaustauschverfahren, das auf ein Datenanforderermitglied angewendet wird, wobei das Verfahren umfasst:
Bestimmen (102) eines Indexinformationssatzes, der Zieldaten entspricht und in einer Index-Blockchain aufgezeichnet ist, wobei der Indexinformationssatz einen Chiffretext-Index der Zieldaten und Mitgliedsinformationen eines Datenanbieters der Zieldaten umfasst, und der Indexinformationssatz vom Datenanbieter mit der Index-Blockchain geteilt wird;
Initiieren (104) einer Datenerfassungsanforderung an den Datenanbieter unter Verwendung einer Austauschplattform, wobei die Datenerfassungsanforderung den Chiffretext-Index der Zieldaten umfasst;
Empfangen (106) von Antwortdaten, die von der Austauschplattform zurückgegeben werden, wobei die Antwortdaten der Datenerfassungsanforderung entsprechen und durch einen öffentlichen Identitätsschlüssel des Datenanforderermitglieds verschlüsselt sind;
**gekennzeichnet durch** Übermitteln einer Transaktion eines Beschwerdetyps für die Antwortdaten an die Index-Blockchain, um einen Smart Contract zum Verarbeiten einer Beschwerde aufzurufen, wobei die Transaktion einen Beschwerdegrund und zugehörige Daten umfasst; und
der Smart Contract verwendet wird, um den Beschwerdegrund basierend auf den zugehörigen Daten zu verifizieren, und wenn verifiziert wird, dass der Beschwerdegrund legitim ist, der Indexinformationssatz mit einer ungültigen Kennung in der Index-Blockchain hinzugefügt wird.

5. Verfahren nach Anspruch 4, wobei die Austauschplattform als ein Knoten der Index-Blockchain eingerichtet ist; und das Bestimmen eines Indexinformationssatzes, der Zieldaten entspricht und in einer Index-Blockchain aufgezeichnet ist, umfasst:
Erzeugen eines entsprechenden Chiffretext-Index basierend auf spezifischen Informationen bekannter Zieldaten; und
Initiieren einer Abfrageanforderung an die Austauschplattform, wobei die Abfrageanforderung den Chiffretext-Index umfasst, um die Austauschplattform anzuweisen, aus der Index-Blockchain einen Indexinformationssatz abzufragen, der den Chiffretext-Index umfasst; oder Herunterladen von Ledger-Daten der Index-Blockchain, die von der Austauschplattform verwaltet werden, um den Indexinformationssatz abzufragen, der den Chiffretext-Index umfasst.

6. Verfahren nach Anspruch 4, wobei das Datenanforderermitglied als ein Knoten der Index-Blockchain eingerichtet ist; und das Bestimmen eines Indexinformationssatzes, der Zieldaten entspricht und in einer Index-Blockchain aufgezeichnet ist, umfasst:
Erzeugen eines entsprechenden Chiffretext-Index basierend auf spezifischen Informationen bekannter Zieldaten; und
Abfragen, basierend auf Ledger-Daten der Index-Blockchain, die von dem Datenanforderermitglied verwaltet werden, eines Indexinformationssatzes, der den Chiffretext-Index umfasst.

7. Verfahren nach Anspruch 4, wobei die Datenerfassungsanforderung ferner den öffentlichen Identitätsschlüssel des Datenanforderermitglieds und eine Signatur des Datenanforderermitglieds umfasst, die unter Verwendung eines privaten Identitätsschlüssels des Datenanforderermitglieds erzeugt wird, um eine Verifizierung durch den Datenanbieter zu erleichtern; und/oder
wobei die Antwortdaten ferner eine Signatur des Datenanbieters umfassen, die unter Verwendung eines privaten Identitätsschlüssels des Datenanbieters erzeugt wird, um eine Verifizierung durch das Datenanforderermitglied zu erleichtern.

8. Verfahren nach Anspruch 4, wobei der Indexinformationssatz einen Hash-Wert der Zieldaten umfasst; und das Verfahren ferner umfasst:
Durchführen einer Hash-Berechnung an entschlüsselten Daten, die den Antwortdaten entsprechen; und
wenn ein berechneter Hash-Wert mit dem Hash-Wert im Indexinformationssatz übereinstimmt, Bestimmen, dass die entschlüsselten Daten die Zieldaten sind.

9. Verfahren nach Anspruch 4, ferner umfassend:
Initiieren einer Beschwerdeanforderung für die Zieldaten an die Austauschplattform, wobei die Beschwerdeanforderung einen Beschwerdegrund und zugehörige Daten umfasst; wobei
wenn verifiziert wird, dass der Beschwerdegrund legitim ist, basierend auf den zugehörigen Daten durch die Austauschplattform oder einen Smart Contract, der durch die Austauschplattform von der Index-Blockchain aufgerufen wird, der Indexinformationssatz mit einer ungültigen Kennung in der Index-Blockchain hinzugefügt wird.

10. Verfahren nach Anspruch 4, ferner umfassend:
Veröffentlichen eines Datenaustauschereignisses zwischen dem Datenanforderermitglied und dem Datenanbieter in einer Transaktions-Blockchain, wobei das Datenanforderermitglied als ein Knoten der Transaktions-Blockchain eingerichtet ist; oder
Senden des Datenaustauschereignisses an die Austauschplattform, so dass die Austauschplattform das Datenaustauschereignis in der Transaktions-Blockchain veröffentlicht, wobei die Austauschplattform als ein Knoten der Transaktions-Blockchain eingerichtet ist.

11. Datenaustauschverfahren, das auf eine Austauschplattform angewendet wird, wobei das Verfahren umfasst:
Veröffentlichen (302) eines Indexinformationssatzes, der Zieldaten entspricht, in einer Index-Blockchain, wobei der Indexinformationssatz einen Chiffretext-Index der Zieldaten und Mitgliedsinformationen eines Datenanbieters der Zieldaten umfasst, und der Indexinformationssatz vom Datenanbieter an die Austauschplattform übermittelt wird;
Weiterleiten (304) einer Datenerfassungsanforderung, die von einem Datenanforderer initiiert wird, an den Datenanbieter, wobei die Datenerfassungsanforderung den Chiffretext-Index der Zieldaten umfasst;
Zurückgeben (306) von Antwortdaten, die der Datenerfassungsanforderung entsprechen, die vom Datenanbieter bereitgestellt wird, an den Datenanforderer, wobei die Antwortdaten durch einen öffentlichen Identitätsschlüssel des Datenanforderers verschlüsselt sind; und
**gekennzeichnet durch** Empfangen einer Transaktion eines Beschwerdetyps für die Antwortdaten, wobei die Transaktion einen Beschwerdegrund und zugehörige Daten umfasst, und wobei die Transaktion einen Smart Contract zum Verarbeiten der Beschwerde aufruft,
wobei der Smart Contract verwendet wird, um den Beschwerdegrund basierend auf den zugehörigen Daten zu verifizieren, und wenn verifiziert wird, dass der Beschwerdegrund legitim ist, der Indexinformationssatz mit einer ungültigen Kennung in der Index-Blockchain hinzugefügt wird.

12. Verfahren nach Anspruch 11, ferner umfassend:
Empfangen einer Abfrageanforderung, die von dem Datenanforderer initiiert wird, wobei die Abfrageanforderung einen Chiffretext-Index umfasst, der basierend auf spezifischen Informationen bekannter Zieldaten erzeugt wird; und
Abfragen eines Indexinformationssatzes, der den Chiffretext-Index umfasst, aus der Index-Blockchain, um den Datenanforderer zu informieren.

13. Verfahren nach Anspruch 11, ferner umfassend:
Empfangen einer Beschwerdeanforderung für die Zieldaten, die von dem Datenanforderer an die Austauschplattform initiiert wird, wobei die Beschwerdeanforderung einen Beschwerdegrund und zugehörige Daten umfasst; und
wenn verifiziert wird, dass der Beschwerdegrund legitim ist, basierend auf den zugehörigen Daten, Hinzufügen einer ungültigen Kennung zu dem Indexinformationssatz in der Index-Blockchain; und/oder
ferner umfassend:
Bestimmen eines Datenaustauschereignisses zwischen dem Datenanforderer und dem Datenanbieter; und
Veröffentlichen des Datenaustauschereignisses in einer Transaktions-Blockchain, wobei die Austauschplattform als ein Knoten der Transaktions-Blockchain eingerichtet ist.

14. Elektronische Vorrichtung, umfassend:
einen Prozessor; und
einen Speicher, der eingerichtet ist, um durch den Prozessor ausführbare Befehle zu speichern; wobei
der Prozessor die ausführbaren Befehle ausführt, um das Verfahren nach einem der Ansprüche 4 bis 13 zu implementieren.

## Revendications

1. Système de partage de données, comprenant :
des membres, dans lequel chaque membre est respectivement configuré pour maintenir des données privées partageables, et pour générer des informations d'index de texte chiffré correspondantes pour les données privées partageables, les informations d'index de texte chiffré correspondantes comprenant un index de texte chiffré des données privées partageables et des informations concernant un membre qui fournit les données privées partageables ; et
une plate-forme de partage, dans lequel la plate-forme de partage est connectée à chaque membre et est configurée pour enregistrer des informations d'index de texte chiffré générées par chaque membre dans une chaîne de blocs d'index pour partage entre tous les membres ; la plate-forme de partage étant configurée pour transmettre une demande d'acquisition de données initiée par un membre demandeur de données à un membre fournisseur de données ; la demande d'acquisition de données comprenant un index de texte chiffré de données cibles, et la plate-forme de partage étant en outre configurée pour transmettre les données cibles correspondant à la demande d'acquisition de données renvoyées par le membre fournisseur de données au membre demandeur de données, dans lequel les données cibles sont chiffrées par une clé publique d'identité du membre demandeur de données,
**caractérisé en ce que** la chaîne de blocs d'index est configurée pour recevoir une transaction d'un type de plainte pour les données cibles, dans lequel la transaction comprend une raison de plainte et des données associées, et dans lequel la transaction invoque un contrat intelligent pour traiter la plainte,
et dans lequel le contrat intelligent est utilisé pour vérifier la raison de la plainte sur la base des données associées, et lorsque la raison de la plainte est vérifiée comme étant légitime, un ensemble d'informations d'index correspondant aux données cibles partagées dans la chaîne de blocs d'index est complété avec un identifiant invalide dans la chaîne de blocs d'index, l'ensemble d'informations d'index comprenant un index de texte chiffré des données cibles et des informations de membre du membre du fournisseur de données.

2. Système de partage de données selon la revendication 1, dans lequel la plate-forme de partage est configurée comme un noeud de chaîne de blocs de la chaîne de blocs d'index ; et la plate-forme de partage est configurée pour obtenir des informations d'index de texte chiffré générées par chaque membre, et configurée pour publier les informations d'index de texte chiffré dans la chaîne de blocs d'index ; dans lequel
la plate-forme de partage est configurée pour solliciter, sur la base d'une demande de sollicitation d'informations initiée par un membre quelconque, des informations d'index de texte chiffré correspondantes dans un registre de chaîne de blocs d'index maintenu par la plate-forme de partage, et pour renvoyer les informations d'index de texte chiffré au membre quelconque ; et/ou au moins un membre est configuré pour télécharger le registre de chaîne de blocs d'index maintenu par la plate-forme de partage pour solliciter des informations d'index de texte chiffré.

3. Système de partage de données selon la revendication 1, dans lequel la plate-forme de partage et chaque membre sont configurés comme des noeuds de chaîne de blocs de la chaîne de blocs d'index, respectivement ; et chaque membre étant configuré pour publier séparément des informations d'index de texte chiffré générées dans la chaîne de blocs d'index, et pour solliciter des informations d'index de texte chiffré en utilisant un registre de chaîne de blocs d'index maintenu par le membre ; et/ou dans lequel la plate-forme de partage est configurée comme un noeud de chaîne de blocs d'une chaîne de blocs de transaction ; et la plate-forme de partage étant en outre configurée pour enregistrer un événement de partage de données entre le membre demandeur de données et le membre fournisseur de données dans la chaîne de blocs de transaction.

4. Procédé de partage de données appliqué à un membre demandeur de données, le procédé comprenant :
la détermination (102) d'un ensemble d'informations d'index correspondant à des données cibles et enregistré dans une chaîne de blocs d'index, dans lequel l'ensemble d'informations d'index comprend un index de texte chiffré des données cibles et des informations de membre d'un fournisseur de données des données cibles, et l'ensemble d'informations d'index est partagé par le fournisseur de données à la chaîne de blocs d'index ;
l'initiation (104) d'une demande d'acquisition de données au fournisseur de données en utilisant une plate-forme de partage, dans lequel la demande d'acquisition de données comprend l'index de texte chiffré des données cibles ;
la réception (106) de données de réponse renvoyées par la plate-forme de partage, dans lequel les données de réponse correspondent à la demande d'acquisition de données et sont chiffrées par une clé publique d'identité du membre demandeur de données ;
**caractérisé par** la soumission d'une transaction d'un type de plainte pour les données de réponse à la chaîne de blocs d'index pour invoquer un contrat intelligent pour traiter une plainte, dans lequel la transaction comprend une raison de la plainte et des données associées ; et
le contrat intelligent est utilisé pour vérifier la raison de la plainte sur la base des données associées, et lorsque la raison de la plainte est vérifiée comme étant légitime, l'ensemble d'informations d'index est complété avec un identifiant invalide dans la chaîne de blocs d'index.

5. Procédé selon la revendication 4, dans lequel la plate-forme de partage est configurée comme un noeud de la chaîne de blocs d'index ; et la détermination d'un ensemble d'informations d'index correspondant à des données cibles et enregistré dans une chaîne de blocs d'index comprend :
la génération d'un index de texte chiffré correspondant sur la base d'informations spécifiques de données cibles connues ; et
l'initiation d'une demande de sollicitation à la plate-forme de partage, dans lequel la demande de sollicitation comprend l'index de texte chiffré pour ordonner à la plate-forme de partage de solliciter, à partir de la chaîne de blocs d'index, un ensemble d'informations d'index ; ou le téléchargement de données de registre de la chaîne de blocs d'index maintenue par la plate-forme de partage, de manière à solliciter l'ensemble d'informations d'index qui comprend l'index de texte chiffré.

6. Procédé selon la revendication 4, dans lequel le membre demandeur de données est configuré comme un noeud de la chaîne de blocs d'index ; et la détermination d'un ensemble d'informations d'index correspondant à des données cibles et enregistré dans une chaîne de blocs d'index comprend :
la génération d'un index de texte chiffré correspondant sur la base d'informations spécifiques de données cibles connues ; et
la sollicitation, sur la base de données de registre de la chaîne de blocs d'index maintenue par le membre demandeur de données, d'un ensemble d'informations d'index qui comprend l'index de texte chiffré.

7. Procédé selon la revendication 4, dans lequel la demande d'acquisition de données comprend en outre la clé publique d'identité du membre demandeur de données et une signature du membre demandeur de données générée en utilisant une clé privée d'identité du membre demandeur de données, pour faciliter la vérification par le fournisseur de données ; et/ou
dans lequel les données de réponse comprennent en outre une signature du fournisseur de données générée en utilisant une clé privée d'identité du fournisseur de données, pour faciliter la vérification par le membre demandeur de données.

8. Procédé selon la revendication 4, dans lequel l'ensemble d'informations d'index comprend une valeur de hachage des données cibles ; et le procédé comprend en outre :
la réalisation d'un calcul de hachage sur des données déchiffrées correspondant aux données de réponse ; et
lorsqu'une valeur de hachage calculée est cohérente avec la valeur de hachage dans l'ensemble d'informations d'index, la détermination que les données déchiffrées sont les données cibles.

9. Procédé selon la revendication 4, comprenant en outre :
l'initiation d'une demande de plainte pour les données cibles à la plate-forme de partage, dans lequel la demande de plainte comprend une raison de la plainte et des données associées ; dans lequel
lorsque la raison de la plainte est vérifiée comme étant légitime sur la base des données associées par la plate-forme de partage ou par un contrat intelligent invoqué par la plate-forme de partage à partir de la chaîne de blocs d'index, l'ensemble d'informations d'index est complété avec un identifiant invalide dans la chaîne de blocs d'index.

10. Procédé selon la revendication 4, comprenant en outre :
la publication d'un événement de partage de données entre le membre demandeur de données et le fournisseur de données dans une chaîne de blocs de transaction, dans lequel le membre demandeur de données est configuré comme un noeud de la chaîne de blocs de transaction ; ou
l'envoi de l'événement de partage de données à la plate-forme de partage, de sorte que la plate-forme de partage publie l'événement de partage de données dans la chaîne de blocs de transaction, dans lequel la plate-forme de partage est configurée comme un noeud de la chaîne de blocs de transaction.

11. Procédé de partage de données appliqué à une plate-forme de partage, le procédé comprenant :
la publication (302) d'un ensemble d'informations d'index correspondant à des données cibles dans une chaîne de blocs d'index, dans lequel l'ensemble d'informations d'index comprend un index de texte chiffré des données cibles et des informations de membre d'un fournisseur de données des données cibles, et l'ensemble d'informations d'index est soumis par le fournisseur de données à la plate-forme de partage ;
le transfert (304) d'une demande d'acquisition de données initiée par un demandeur de données au fournisseur de données, dans lequel la demande d'acquisition de données comprend l'index de texte chiffré des données cibles ;
le renvoi (306) de données de réponse correspondant à la demande d'acquisition de données fournie par le fournisseur de données au demandeur de données, dans lequel les données de réponse sont chiffrées par une clé publique d'identité du demandeur de données ; et
**caractérisé par** la réception d'une transaction d'un type de plainte pour les données de réponse, dans lequel la transaction comprend une raison de la plainte et des données associées, et dans lequel la transaction invoque un contrat intelligent pour traiter la plainte,
dans lequel le contrat intelligent est utilisé pour vérifier la raison de la plainte sur la base des données associées, et lorsque la raison de la plainte est vérifiée comme étant légitime, l'ensemble d'informations d'index est complété avec un identifiant invalide dans la chaîne de blocs d'index.

12. Procédé selon la revendication 11, comprenant en outre :
la réception d'une demande de sollicitation initiée par le demandeur de données, dans lequel la demande de sollicitation comprend un index de texte chiffré généré sur la base d'informations spécifiques de données cibles connues ; et
la sollicitation d'un ensemble d'informations d'index comprenant l'index de texte chiffré à partir de la chaîne de blocs d'index pour informer le demandeur de données.

13. Procédé selon la revendication 11, comprenant en outre :
la réception d'une demande de plainte pour les données cibles initiée par le demandeur de données à la plate-forme de partage, dans lequel la demande de plainte comprend une raison de la plainte et des données associées ; et
lorsque la raison de la plainte est vérifiée comme étant légitime sur la base des données associées, l'ajout d'un identifiant invalide à l'ensemble d'informations d'index dans la chaîne de blocs d'index ; et/ou
comprenant en outre :
la détermination d'un événement de partage de données entre le demandeur de données et le fournisseur de données ; et
la publication de l'événement de partage de données dans une chaîne de blocs de transaction, dans lequel la plate-forme de partage est configurée comme un noeud de la chaîne de blocs de transaction.

14. Dispositif électronique, comprenant :
un processeur ; et
une mémoire, configurée pour stocker des instructions exécutables par le processeur ; dans lequel
le processeur exécute les instructions exécutables pour mettre en oeuvre le procédé selon l'une quelconque des revendications 4 à 13.
